# DEMANDE DE BREVET EUROPEEN

(11) **EP 1 632 156 A2**
(43) Date de publication de la demande: **08.03.2006**
(21) Numéro de dépôt: 05108020.8
(22) Date de dépôt: 01.09.2005
(51) Int. Cl.: A47F 5/08, F16B 13/12

(54) **Dispositif de fixation pour accessoire mural**

(30) Priorité: 03.09.2004 FR 0451968
(71) Demandeur: SARL Designa, 64210 Bidart (FR)
(72) Inventeur: Lauthers, Staffan, 64500, SAINT JEAN DE LUZ (FR)
(74) Mandataire: Schmit, Christian Norbert Marie

(57) **Abrégé**

- L'objet de l'invention est un dispositif de fixation pour accessoire mural comportant un insert (1), de réception d'un tube (2) de fixation d'un accessoire, pourvu d'une partie tubulaire (3) s'insérant dans un panneau (5) et d'une face (4) débouchant du panneau (5) caractérisé en ce que la partie tubulaire (3) comporte au moins une fente longitudinale (6, 7), de réception d'une tige (8, 9, 8', 9') de blocage de l'insert (1) dans le panneau (5).

## Description

La présente invention concerne un dispositif de fixation pour accessoire mural.

Les accessoires muraux comprennent des accessoires de présentation particulièrement utilisés pour des systèmes de présentation murale de marchandises diverses dans des espaces de vente, par exemple dans le domaine de l'habillement, des articles ménagers, de sport, de loisir, de bricolage, de jardinage ou autre comprenant des panneaux, mobiles ou fixés sur des parois, et munis de moyens d'accrochage ou fixation de divers supports de présentation de la marchandise.

Ces accessoires peuvent en outre être utilisés dans des meubles ou des panneaux de pièces telles que salles de bain pour recevoir des objets tels que des serviettes, savons ou autres.

Le document FR 2 798 131 au nom de la demanderesse concerne plus particulièrement les panneaux du type comportant de place en place sur l'une de leurs faces des inserts de réception support d'éléments amovibles supportant les objets à présenter et un insert pourvu d'un téton de calage angulaire.

L'insert selon ce document nécessite le perçage de deux trous précisément positionnés l'un par rapport à l'autre.

La présente invention vise à proposer un dispositif de fixation pour accessoires de présentation murale perfectionné simple à utiliser tout en offrant une forte tenue à l'arrachement et une grande force de rétention des accessoires, le dispositif étant en outre apte à supporter de lourdes charges.

Pour ce faire, la présente invention concerne principalement un dispositif de fixation pour accessoire mural comportant un insert, de réception d'un tube de fixation d'un accessoire, pourvu d'une partie tubulaire s'insérant dans un panneau et d'une face débouchant du panneau caractérisé en ce que la partie tubulaire comporte au moins une fente longitudinale, de réception d'une tige de blocage de l'insert dans le panneau.

Selon un mode de réalisation préférentiel, la tige est munie d'une partie libre comportant un profil en coin, d'encastrement entre les parois longitudinales de la fente, de sorte que, lors de l'insertion du tube dans l'insert, la partie libre de la tige poussée par le tube s'encastre entre les parois longitudinales de la fente et réalise ainsi simultanément un blocage du tube dans l'insert et la rétention de l'insert dans le panneau par expansion de la partie tubulaire de l'insert dans le panneau.

Avantageusement, la tige comporte une extrémité, de raccordement à la partie tubulaire de l'insert, disposée à une extrémité de la fente du côté opposé à la face débouchant du panneau, la partie libre de la tige étant dirigée vers ladite face.

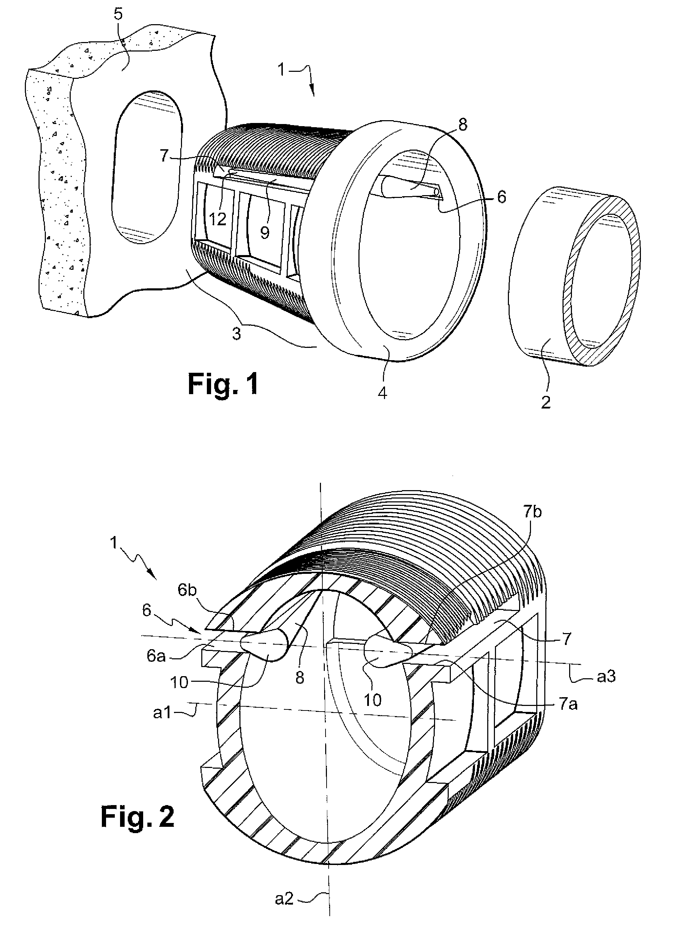

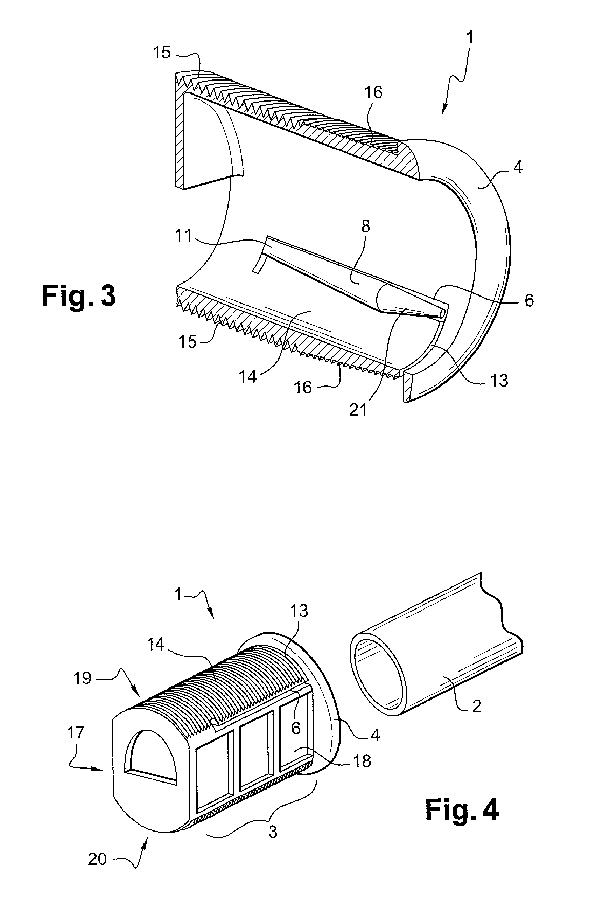

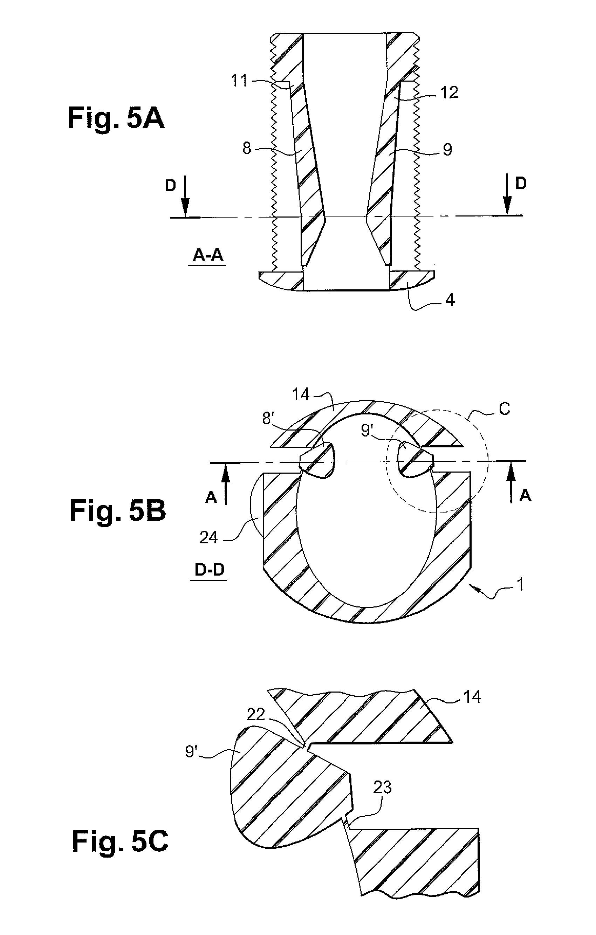

D'autres caractéristiques et avantages de l'invention seront mieux compris à la lecture de la description qui va suivre d'un exemple de réalisation non limitatif de l'invention en référence aux figures qui représentent:
En figure 1: une vue en perspective d'un exemple de réalisation d'un dispositif selon l'invention,
en figure 2: le dispositif de la figure 1 en perspective coupe transversale,
en figure 3: le dispositif de la figure 1 en perspective coupe longitudinale,
en figure 4: le dispositif de la figure 1 en perspective de trois quart arrière.
en figures 5A, 5B et 5C: des détails d'un dispositif insert selon l'invention en coupe.

Le dispositif de fixation pour accessoire mural selon l'invention représenté en figure 1 comporte un insert 1 s'insérant dans un trou réalisé dans un panneau 5 ou un mur. L'insert 1 est un insert de réception d'un tube 2 de fixation d'un accessoire dans l'insert.

L'accessoire peut être un porte manteaux, une tablette ou tout autre objet décoratif ou support à fixer dans le panneau 5.

L'insert est pourvu d'une partie tubulaire 3 s'insérant dans le panneau 5 et d'une face 4, débouchant du panneau 5.

La face 4, débouchant du panneau, est préférablement constituée par une collerette masquant la découpe du trou dans le panneau.

L'insert selon l'invention est par exemple en matériau plastique moulé et est tel que la partie tubulaire 3 comporte au moins une fente longitudinale 6, 7 ou rainure, de réception d'une tige 8, 9 de blocage de l'insert 1 dans le panneau 5.

L'insert comporte une section ronde ou oblongue, une section oblongue facilitant le positionnement de l'insert et des accessoires sur le panneau.

Selon l'exemple représenté en figure 1, l'insert comporte deux fentes longitudinales 6, 7 et deux tiges de blocage 8, 9 fixées par une de leurs extrémités à une extrémité des fentes longitudinales 6,7, les fentes longitudinales s'étendant entre la face 4 et une section arrière de la partie tubulaire 3 et s'arrêtant avant la face 4 et avant la section arrière de la partie tubulaire 3.

Les tiges 8, 9 dont un exemplaire est représenté de l'intérieur de la partie tubulaire en figure 3 et en coupe selon un plan longitudinal en figure 5A, comportent ainsi une extrémité 11, 12 de raccordement à la partie tubulaire 3 de l'insert, sur la face arrière de la fente 6, 7 du côté opposé à la face 4 débouchant du panneau.

La partie libre des tiges 8, 9 est dirigée vers la face débouchant du panneau, les tiges 8, 9 longeant la fente 6, 7 tout en étant inclinées vers l'intérieur de la partie tubulaire 3 en direction de la face 4 débouchant du panneau ce qui positionne le point de friction au début de l'insert et améliore la rétention de l'accessoire.

Avantageusement, les tiges 8, 9 sont des tiges ressort ayant une section croissante depuis leur extrémité de raccordement jusqu'au point de friction et sont réalisées par des tiroirs dans le moule de fabrication de l'insert.

Les parties libres des tiges 8, 9 comportent un profil en coin 10 représenté notamment en figures 2 et 5C pour une variante de réalisation discutée plus loin. Ce profil est un profil d'encastrement entre les parois longitudinales 6a, 6b, 7a, 7b des fentes 6, 7.

Le dispositif de fixation est réalisé de telle sorte que le profil interne de la partie tubulaire 3 et le profil externe du tube 2 sont complémentaires et ajustés afin que, lors de l'insertion du tube 2 dans l'insert 1, la partie libre des tiges 8, 9, ou de la tige 8 ou 9 dans le cas d'un dispositif comportant une seule fente et une seule tige, soit poussée latéralement par le tube 2 lorsque ce dernier est inséré dans la partie tubulaire.

Sous cette poussée latérale, les tiges 8, 9 s'encastrent entre les parois longitudinales 6a, 6b, 7a, 7b des fentes et repoussent ces dernières causant ainsi une expansion de la partie tubulaire de l'insert dans le panneau ce qui permet la rétention de l'insert dans le panneau. Cette disposition pour laquelle les tiges sont comprimées entre le tube 2 et les parois des fentes réalise simultanément un blocage longitudinal du tube 2 dans l'insert 1 par friction et la rétention de l'insert dans le panneau.

Une des particularités de l'exemple de réalisation est que la partie tubulaire 3 de l'insert 1 est pourvue d'un profil interne sensiblement ovale ce qui permet de retenir le tube, lui même ovale, en rotation. L'invention est toutefois applicable dans le cadre d'un insert à profil interne de section circulaire.

Comme vu précédemment, le profil externe de l'insert peut être rond ou ovale, le profil ovale permettant d'orienter l'insert dans le panneau.

En outre, comme représenté en figure 5B, l'insert selon l'invention peut être pourvu d'une oreille 24 de polarisation permettant un positionnement avec une orientation unique de l'insert sur 360° grâce à un perçage complémentaire dans le panneau.

Comme indiqué précédemment, l'insert décrit comporte deux tiges de blocages 8, 9 et deux fentes longitudinales 6, 7.

Toujours dans le but d'améliorer la rétention des accessoires et pour un insert à section tubulaire oblongue, ovale ou elliptique par exemple comportant un grand axe de symétrie a1 et un petit axe de symétrie a2 tel que représenté en figure 2, les tiges et les fentes se font face en vis à vis dans le profil interne de la partie tubulaire 3 selon un axe a3 parallèle à un petit axe a2 du profil interne.

La position décalée des tiges est visible notamment en figure 5B, l'oreille 24 permettant de s'assurer que les tiges sont positionnées en partie haute du perçage.

Dans le cas d'une partie tubulaire de section circulaire, les tiges et les fentes peuvent être en vis à vis dans un plan ne passant pas par l'axe de la partie tubulaire pour obtenir un même effet.

Ce décalage des tiges et des fentes permet aussi d'orienter l'insert dans le panneau de sorte que les tiges soient positionnées en partie haute du perçage.

Pour accroître l'expansion de la partie tubulaire de l'insert dans le panneau, les fentes longitudinales 6, 7 sont reliées par une fente 13 entaillant la partie tubulaire à proximité de la face 4.

Ainsi, la section de partie tubulaire encadrée par les fentes 6, 7 et la fente 13 forme une lame flexible 14 fixée à l'arrière de la partie tubulaire et susceptible de s'incliner vers l'extérieur sous l'action des tiges 8, 9.

Selon la représentation de la figure 3, la tige 8 comporte une partie renflée 21 qui détermine la zone de pression maximale appliquée sur la lame flexible 14, cette zone de pression maximale étant selon l'exemple entre un quart et un cinquième de la longueur de l'insert en partant de la collerette 4.

Toujours pour améliorer la rétention de l'insert dans le panneau au moins une portion de la partie tubulaire 3 de l'insert est pourvue de stries 15, 16.

En partie arrière, les stries 15 sont par exemple réalisées sous forme d'un pas de vis alors que sur la partie avant de l'insert, elles sont parallèles et de pas et hauteur réduite pour accroître la surface de contact de la face externe de l'insert dans le trou réalisé dans le panneau.

Des stries sont notamment réalisées sur la lame flexible 14 dans la zone en regard de la partie renflée des tiges, ces stries étant fortement appliquées contre la paroi du trou réalisé dans le panneau 5.

Selon la figure 4, la partie tubulaire 3 de l'insert a un profil tel que la face externe de la partie tubulaire 3 comporte deux faces planes 17, 18 reliées par deux faces 19, 20 de section en arc de cercle ce qui facilite le moulage de l'insert et notamment le moulage des tiges au travers des fentes.

Les faces planes sont nervurées pour limiter l'épaisseur des parois moulées tout en conservant une rigidité importante à la partie tubulaire 3, la lame flexible 14 étant réalisée dans l'une des faces 19, 20 de section en arc de cercle.

En variante et, comme représenté en figures 5B et 5C, les tiges 8', 9' peuvent être reliées aux parois des fentes longitudinales par des liens sécables 22, 23 qui une fois brisés participent à la rétention des tiges dans les fentes.

L'insert selon l'invention est particulièrement adapté pour être inséré à l'aide d'un outil prenant la place de l'accessoire pour le montage de l'insert dans le panneau, cet outil forçant les tiges entre les fentes ce qui assure une rétention de l'insert ou des inserts dans le panneau avant montage des accessoires.

L'outil peut notamment être pourvu d'une butée coopérant avec la collerette et n'autorisant son enfoncement que sur une distance suffisante pour écarter les tiges mais insuffisante pour éventuellement endommager la face arrière de l'insert.

L'invention ne se limite pas aux exemples représentés et notamment le dispositif selon l'invention peut comporter un plus grand nombre de fentes et de tiges tout en restant dans le cadre de l'invention.

## Revendications

1. Dispositif de fixation pour accessoire mural comportant un insert (1), de réception d'un tube (2) de fixation d'un accessoire, pourvu d'une partie tubulaire (3) s'insérant dans un panneau (5) et d'une face (4) débouchant du panneau (5) **caractérisé en ce que** la partie tubulaire (3) comporte au moins une fente longitudinale (6, 7), de réception d'une tige (8, 9, 8', 9') de blocage de l'insert (1) dans le panneau (5).

2. Dispositif de fixation selon la revendication 1 ou 2 **caractérisé en ce que** la tige (8, 9, 8', 9') est munie d'une partie libre comportant un profil en coin (10), d'encastrement entre les parois longitudinales (6a, 6b, 7a, 7b) de la fente (6, 7) de sorte que, lors de l'insertion du tube (2) dans l'insert (1), la partie libre de la tige (8, 9, 8', 9') poussée par le tube (2) s'encastre entre les parois longitudinales (6a, 6b, 7a, 7b) de la fente et réalise ainsi simultanément un blocage du tube (2) dans l'insert (1) et la rétention de l'insert (1) dans le panneau (5) par expansion de la partie tubulaire de l'insert dans le panneau.

3. Dispositif de fixation selon la revendication 1 ou 2 **caractérisé en ce que** la tige (8, 9, 8', 9') comporte une extrémité (11, 12), de raccordement à la partie tubulaire (3) de l'insert, disposée à une extrémité de la fente (6, 7) du côté opposé à la face (4) débouchant du panneau, la partie libre de la tige (8, 9, 8', 9') étant dirigée vers ladite face.

4. Dispositif de fixation selon la revendication 1, 2 ou 3 **caractérisé en ce que** la tige (8, 9, 8', 9') longe la fente (6, 7) et est inclinée vers l'intérieur de la partie tubulaire (3) en direction de la face (4) débouchant du panneau.

5. Dispositif de fixation selon l'une quelconque des revendications précédentes **caractérisé en ce que** la partie tubulaire (3) de l'insert (1) est pourvue d'un profil interne sensiblement ovale.

6. Dispositif de fixation selon l'une quelconque des revendications précédentes **caractérisé en ce qu'**il comporte .deux tiges de blocages (8, 9, 8', 9') et deux fentes longitudinales (6, 7) se faisant face en vis à vis dans le profil interne de la partie tubulaire (3).

7. Dispositif de fixation selon la revendication 6 **caractérisé en ce que** les tiges de blocages (8, 9, 8', 9') et les fentes longitudinales (6, 7) en vis à vis se font face selon un axe (a3) parallèle à un petit axe (a2) du profil interne.

8. Dispositif de fixation selon la revendication 6 ou 7 **caractérisé en ce que** les fentes longitudinales (6, 7) sont reliées, à proximité de la face (4), par une fente (13) entaillant la partie tubulaire (3), de sorte que la section de partie tubulaire encadrée par les fentes (6, 7) et la fente (13) forme une lame flexible (14) réalisant l'expansion de la partie tubulaire (3) dé l'insert (1) dans le panneau (5).

9. Dispositif de fixation selon l'une quelconque des revendications précédentes **caractérisé en ce qu'**au moins une portion de la partie tubulaire (3) est pourvue de stries (15, 16).

10. Dispositif de fixation selon l'une quelconque des revendications précédentes **caractérisé en ce que** la face (4) débouchant du panneau est constituée par une collerette.

11. Dispositif de fixation selon la revendication 8 **caractérisé en ce que** la face externe de la partie tubulaire (3) comporte deux faces planes (17, 18) reliées par deux faces (19, 20) de section en arc de cercle et **en ce que** la lame flexible (14) est réalisée dans l'une des faces (19, 20) de section en arc de cercle.

12. Dispositif de fixation selon l'une quelconque des revendications précédentes **caractérisé en ce que** les tiges (8', 9') sont reliées aux parois des fentes longitudinales par des liens sécables (22, 23) qui, une fois brisés participent à la rétention des tiges dans les fentes.
